# DEMANDE DE BREVET EUROPEEN

(11) **EP 1 022 602 A1**
(43) Date de publication de la demande: **26.07.2000**
(21) Numéro de dépôt: 00400167.3
(22) Date de dépôt: 21.01.2000
(51) Int. Cl.: G02C 11/02

(54) **Monture de lunette**

(30) Priorité: 25.01.1999 FR 9900773
(71) Demandeur: LOGO, 94340 Joinville le Pont (FR)
(72) Inventeur: Jacquier, Hervé, 94340 Joinville-le-Pont (FR)
(74) Mandataire: CABINET BONNET-THIRION

(57) **Abrégé**

Monture de lunettes présentant un caractère esthétique et/ou amusant en raison d'une partie décorative mobile.

Selon l'invention, la monture est équipée d'au moins un élément mobile (20) présentant une partie décorative (21) et une partie optique transparente (22) recouvrant une ouverture (19) et l'élément mobile est monté tournant en regard de l'ouverture (19).

L'élément mobile peut avoir un contour ovoïde.

## Description

L'invention concerne une monture de lunettes et plus particulièrement une monture présentant un caractère esthétique et./ou amusant en raison d'une partie décorative mobile.

La forme d'une monture de lunettes est devenue un élément très important pour l'utilisateur. On a proposé toutes sortes de montures plus ou moins expressives et esthétiques, certaines ayant même un caractère volontairement provoquant et/ou amusant.

Par exemple, le document PCT WO 98/23994 décrit une monture dont chaque cadre ou "cercle", c'est-à-dire la partie de montage du verre, incorpore un anneau plat à caractère ornemental, entourant et soulignant le verre. Cet anneau est monté tournant dans une rainure du cadre. Certaines parties de l'anneau sont cachées frontalement. Il comporte plusieurs zones de couleurs ou aspects différents. En ajustant la position de l'anneau par rapport aux caches frontaux du cadre, on peut modifier l'aspect esthétique de la monture.

Cependant, l'anneau ne fait que souligner le verre qu'il entoure, de sorte que les variations d'aspect que l'on peut obtenir sont relativement limitées. Cet agencement ne permet pas de disposer d'une monture réellement "expressive" et dont l'aspect puisse être modifié dans de larges limites. L'invention permet d'atteindre cet objectif.

Plus précisément, l'invention concerne une monture de lunettes comprenant deux cadres reliés par un pont, chaque cadre ayant une ouverture, caractérisée en ce qu'elle comporte au moins un élément mobile présentant une partie décorative et une partie optique transparente recouvrant une ouverture précitée et en ce que ledit élément comprend un moyen de montage par lequel il est monté tournant en regard de ladite ouverture.

La partie optique transparente peut former un verre, soit un verre non correcteur, par exemple un verre de protection solaire, soit un verre correcteur, par exemple de type unifocal, soit les deux.

Selon un mode de réalisation préféré, la partie décorative et la partie optique ne sont pas dissociables l'une de l'autre ; elles sont définies dans le même matériau transparent et forment une seule pièce.

Parmi les modes de réalisation possibles, on peut citer comme particulièrement remarquable et comme possédant un caractère esthétique et amusant, particulièrement intéressant, le cas où un tel élément mobile a une forme non circulaire, lui conférant au moins une partie de son caractère décoratif. En effet, l'élément non circulaire peut être orienté dans toutes les directions et ceci indépendamment de l'élément voisin. On obtient un effet très particulier lorsque l'élément mobile a un contour ovoïde. Dans ce cas, lorsque la partie allongée de l'élément à contour ovoïde se trouve dans le prolongement latéral du cadre, c'est-à-dire globalement horizontalement, la monture prend un aspect relativement traditionnel et peu remarquable. En revanche, dès qu'au moins un élément est tourné par rapport à cette position "neutre", la monture prend un aspect provoquant et/ou amusant. Les possibilités expressives sont variables en modifiant, à tout moment souhaité, l'orientation de l'un ou l'autre des éléments.

Le moyen de montage précité peut être constitué par une bague définie à la face arrière de l'élément mobile. Cette bague comporte une gorge annulaire par laquelle ledit élément est monté tournant dans l'ouverture du cadre correspondant.

L'invention sera mieux comprise et d'autres détails avantageux de celle-ci apparaîtront plus clairement à la lumière de la description qui va suivre d'une monture de lunettes conforme à son principe, donnée uniquement à titre d'exemple et faite en référence aux dessins annexés dans lesquels:
- la figure 1 est une vue frontale en perspective de la monture de lunettes;
- la figure 2 est une vue frontale de la même monture, les éléments mobiles étant dans une autre position ;
- la figure 3 est une vue arrière de la monture de lunettes ;
- la figure 4 est une vue arrière de l'un des éléments mobiles ;
- la figure 5 est une coupe V-V de la figure 4 ;
- la figure 6 est une vue de détail à plus grande échelle illustrant la coopération entre un élément élastique fixé sur le cadre et le bord de l'élément mobile correspondant ;
- les figures 7 à 9 sont des vues de détail semblables, illustrant une variante ; et

Les figures 10 et 11 sont des vues de détail illustrant d'autres variantes.

La monture de lunettes 11 représentée comporte classiquement deux cadres 12 encore appelés "cercles", pour le montage des verres, deux branches 14 respectivement articulées par des charnières 15 au bord desdits cadres et un pont nasal 17. Ce dernier établit la liaison entre les deux cadres. Chacun de ces cadres comporte une ouverture circulaire 19.

Selon une caractéristique importante de l'invention, la monture comporte deux éléments mobiles 20 présentant chacun une partie décorative 21 et une partie optique 22 transparente. Cette dernière recouvre l'ouverture circulaire 19 correspondante du cadre 12. Plus précisément, chaque élément mobile 20 est constitué d'une partie optique et d'une partie décorative et il est monté tournant dans son ensemble dans l'ouverture circulaire 19 correspondante, par un moyen de montage approprié. Dans cet exemple, chaque élément comporte une bague 24 solidaire de l'élément 20, plus précisément définie à la face arrière de celui-ci et cette bague comporte une gorge annulaire 25 par laquelle l'élément mobile 20 est monté tournant dans l'ouverture circulaire 19 du cadre correspondant.

Dans l'exemple représenté, l'ensemble de l'élément 20 est défini dans une matière plastique transparente teintée de sorte qu'il forme un verre de protection solaire. On obtient ainsi une paire de lunettes de soleil où chaque élément, qui forme un verre de protection solaire a une forme non circulaire lui conférant au moins une partie de son caractère décoratif. Selon l'exemple décrit, chaque élément 20 a un contour ovoïde.

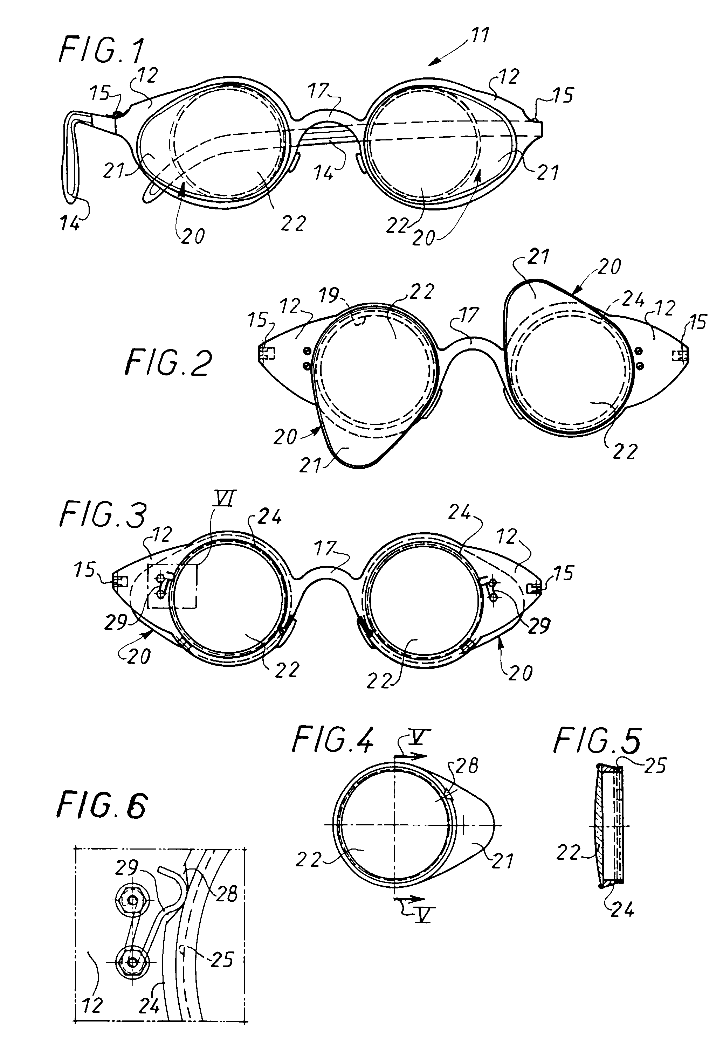

Lorsque les éléments 20 sont disposés de la façon indiquée sur les figures 1 et 3, ils s'intègrent à la forme globale de la monture 11 et l'impression donnée est relativement conventionnelle. Pour faciliter la mise en place des éléments dans cette position conventionnelle, on a prévu, sur chacun d'eux, une creusure latérale 28 pratiquée dans l'épaisseur de la bague 24, avec laquelle coopère un élément élastique 29 solidaire du cadre 12. Cet agencement simple définit une position prédéterminée de référence pour l'élément 20, qui est celle représentée sur les figures 1 et 3. Pour toute autre position, l'élément élastique 29 prend appui sur le bord de la bague 24 et stabilise celle-ci, par frottement, dans toute position choisie. On peut aussi prévoir plusieurs creusures latérales 28 réparties à la périphérie de la bague 24 pour définir plusieurs positions prédéterminées de référence.

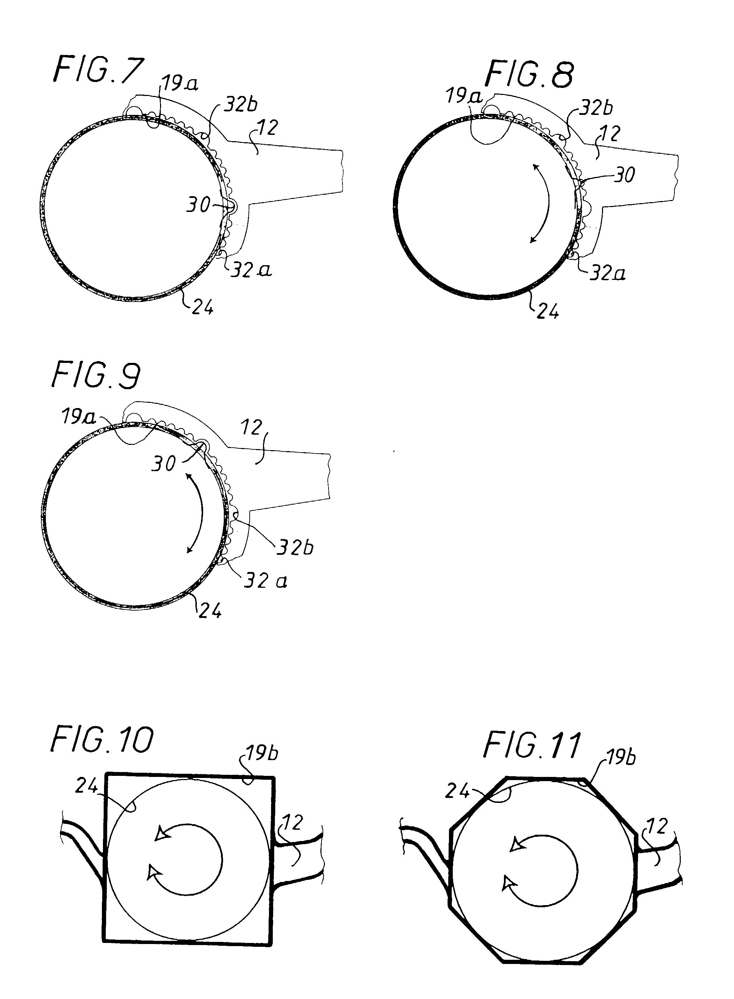

Comme le montrent les figures 7 à 9, l'agencement peut être inverse, c'est-à-dire que la bague 24 peut porter un élément élastique 30 du type ressort-lame conformé pour définir un bossage saillant coopérant avec une ou plusieurs encoches 32a, 32b sensiblement semi-circulaires définies sur le bord interne de l'ouverture circulaire du cadre 12.

Dans l'exemple, on distingue deux types d'encoche, des groupes d'encoches peu profondes 32a (par exemple cinq) sont intercalés entre deux encoches profondes 32b. Les petites encoches provoquent, en coopération avec l'élément élastique 30, un petit cliquetis perceptible lorsqu'on fait tourner la bague d'une position prédéterminée à une autre correspondant à l'engagement de l'élément 30 dans une encoche 32b. Dans une telle position, l'engagement de l'élément 30 dans l'encoche provoque un bruit caractéristique, différent.

La figure 2 montre l'aspect amusant que peut prendre la monture de lunettes dès lors que l'un et/ou l'autre des deux éléments est placé dans une position quelconque.

Comme indiqué ci-dessus, la partie optique (tout comme la partie décorative qui n'est qu'un prolongement latéral de la partie optique) est transparente mais teintée de façon à constituer un verre de protection solaire. Cette partie optique peut également constituer un verre correcteur, si celui-ci est un verre unifocal. Il peut aussi constituer un verre correcteur teinté, offrant une protection solaire.

Enfin, il est à noter que le cadre lui-même peut être pourvu d'une ouverture (19b) non circulaire, par exemple en forme générale de polygone régulier tel qu'un carré (figure 10) ou un octogone (figure 11). Le moyen de montage peut être identique et comporter par exemple une bague 24 montée tournante grâce à une gorge annulaire dans l'ouverture non circulaire.

## Revendications

1. Monture de lunettes comprenant deux cadres (21) reliés par un pont (17), chaque cadre ayant une ouverture (19), caractérisée en ce qu'elle comporte au moins un élément mobile (20) présentant une partie décorative (21) et une partie optique transparente (22), recouvrant une ouverture précitée et un moyen de montage (24, 25) par lequel il est monté tournant en regard de ladite ouverture.

2. Monture selon la revendication 1, caractérisée en ce qu'elle est équipée d'un tel élément mobile (20) à chaque cadre.

3. Monture selon la revendication 1 ou 2, caractérisée en ce qu'une telle partie optique (22) forme un verre de protection solaire.

4. Monture selon l'une des revendications 1 à 3, caractérisée en ce qu'une telle partie optique (22) forme un verre correcteur.

5. Monture selon l'une des revendications précédentes, caractérisée en ce que le ou chaque élément mobile (20) a une forme non circulaire lui conférant au moins une partie de son caractère décoratif.

6. Monture selon la revendication 5, caractérisée en ce que le ou chaque élément mobile (20) a un contour ovoïde.

7. Monture selon l'une des revendications précédentes, caractérisée en ce que ledit moyen de montage comporte une bague (24) solidaire dudit élément mobile comprenant une gorge annulaire (25) par laquelle ledit élément mobile (20) est monté tournant dans ladite ouverture du cadre (12) correspondant.

8. Monture selon la revendication 7, caractérisée en ce que ladite bague comporte une creusure latérale (28) coopérant avec un élément élastique (29) solidaire dudit cadre pour définir une position prédéterminée de référence dudit élément mobile (20).

9. Monture selon la revendication 7, caractérisée en ce que ladite ouverture dudit cadre comporte une ou plusieurs encoches (32a, 32b) définies sur le bord interne d'une ouverture (19a) précitée, circulaire, coopérant avec un élément élastique (30) porté par ladite bague.

10. Monture selon la revendication 9, caractérisée en ce que ladite ouverture est pourvue d'encoches de profondeurs différentes.

11. Monture selon l'une des revendications précédentes, caractérisée en ce que chaque ouverture (19) précitée est circulaire.

12. Monture selon l'une des revendications 1 à 10, caractérisée en ce que chaque ouverture (19b) précitée a un contour en forme générale de polygone.

13. Monture selon l'une des revendications précédentes, caractérisée en ce que ladite partie décorative (21) et ladite partie optique (22) forment une seule pièce définie dans un même matériau transparent.
